# EUROPÄISCHE PATENTANMELDUNG

(11) **EP 2 530 814 A1**
(43) Veröffentlichungstag der Anmeldung: **05.12.2012**
(21) Anmeldenummer: 11168683.8
(22) Anmeldetag: 03.06.2011
(51) Int. Cl.: H02K 1/12, H02K 15/02

(54) **Elektromotor mit paralleler Ausrichtung der äußeren Ständerbleche**

(71) Anmelder: Siemens Aktiengesellschaft, 80333 München (DE)
(72) Erfinder: Bähr, Hubertus, 97631 Bad Königshofen (DE); Räder, Sebastian, 97654 Bastheim (DE)

(57) **Zusammenfassung**

Ein Elektromotor weist ein Ständerblechpaket (1) auf, das aus einem Stapel von Ständerblechen (2,2') besteht. An die beiden äußeren Ständerbleche (2') ist jeweils ein Abschlusselement (3) angesetzt. Die Abschlusselemente (3) sind über das Ständerblechpaket (1) durchquerende Verbindungsbolzen (4) miteinander verspannt, so dass die Abschlusselemente (3) an die beiden äußeren Ständerbleche (2') angedrückt sind. Dem Ständerblechpaket (1) ist eine Halteeinrichtung (5,6) zugeordnet ist, aufgrund derer die beiden äußeren Ständerbleche (2') trotz des von den Abschlusselementen (3) auf das Ständerblechpaket (1) ausgeübten Drucks in einem vordefinierten Abstand voneinander und parallel zueinander ausgerichtet gehalten werden.

## Beschreibung

Die vorliegende Erfindung betrifft einen Elektromotor,
- wobei der Elektromotor ein Ständerblechpaket aufweist, das aus einem Stapel von Ständerblechen besteht,
- wobei an die beiden äußeren Ständerbleche jeweils ein Abschlusselement angesetzt ist,
- wobei die Abschlusselemente über das Ständerblechpaket durchquerende Verbindungsbolzen miteinander verspannt sind, so dass die Abschlusselemente an die beiden äußeren Ständerbleche angedrückt sind.

Die Ständerbleche des Ständerblechpakets eines Elektromotors weisen über ihre Fläche gesehen in der Regel nicht überall die gleiche Dicke auf. Insbesondere weisen sie oftmals einen - wenn auch nur geringen - Dickenkeil auf. Wenn die Abschlusselemente - beispielsweise ein bedienseitiger Lagerschild und ein antriebsseitiger Gehäuseflansch - an die beiden äußeren Ständerbleche angesetzt sind und die Abschlusselemente über das Ständerblechpaket durchquerende Verbindungsbolzen miteinander verspannt werden, hat dies zur Folge, dass sich die Abschlusselemente in Abhängigkeit der summierten Ständerblechdicken ausrichten. In der Regel ergibt sich daher in der Praxis eine Schiefheit der Abschlusselemente.

Die Schiefheit kann nicht toleriert werden. Im Stand der Technik ist es daher erforderlich, nach dem Verspannen der Abschlusselemente eine Nachbearbeitung des aus Ständerblechpaket und Abschlusselementen bestehenden Gesamtblocks vorzunehmen. Für die Bearbeitung sind hochwertige, teuere Werkzeugmaschinen mit Sonderspanndornen erforderlich. Weiterhin müssen die Abschlusselemente mit erhöhter Materialmenge gefertigt werden, damit bei der Nachbearbeitung der entsprechende Materialabtrag möglich ist. Weiterhin kann es im Laufe der Nachbearbeitung geschehen, dass Lunker in den Abschlusselementen freigedreht werden. Dies führt häufig zu Störungen im Prozessablauf.

Die Aufgabe der vorliegenden Erfindung besteht darin, die Nachteile des Standes der Technik auf einfache und elegante Weise zu vermeiden.

Die Aufgabe wird durch einen Elektromotor mit den Merkmalen des Anspruchs 1 gelöst. Vorteilhafte Ausgestaltungen des erfindungsgemäßen Elektromotors sind Gegenstand der abhängigen Ansprüche 2 bis 6.

Erfindungsgemäß ist bei einem Elektromotor der eingangs genannten Art dem Ständerblechpaket eine Halteeinrichtung zugeordnet, aufgrund derer die beiden äußeren Ständerbleche trotz des von den Abschlusselementen auf das Ständerblechpaket ausgeübten Drucks in einem vordefinierten Abstand voneinander und parallel zueinander ausgerichtet gehalten werden.

Das Ständerblechpaket verhält sich, wenn es zwischen den zwei Abschlusselementen eingespannt wird (Vorgang), ähnlich wie eine Schraubenfeder: Das Ständerblechpaket lässt sich zusammenpressen, bis die Ständerbleche des Ständerblechpakets einander großflächig kontaktieren ("auf Block gehen"). Die Schiefheit des Ständerblechpakets kommt im Stand der Technik dadurch zustande, dass die zum Verspannen der Abschlusselemente erforderlichen Kräfte von den Ständerblechen des Ständerblechpakets vom einen auf das andere Abschlusselement übertragen werden. Die erfindungsgemäße Halteeinrichtung ist zwischen den Abschlusselementen angeordnet und bewirkt die Kraftübertragung vom einen auf das andere Abschlusselement oder ist zwischen den Ständerblechen des Ständerblechpakets verteilt angeordnet und übernimmt die Kraftübertragung von Ständerblech zu Ständerblech.

Wenn die Kraftübertragung von Abschlusselement zu Abschlusselement erfolgt, weist die Halteeinrichtung eine Mehrzahl von Abstandhaltern auf, die eine definierte Länge aufweisen und sich durch das Ständerblechpaket hindurch vom einen zum anderen Abschlusselement erstrecken. Das Ständerblechpaket ist in diesem Fall von den Abschlusselementen elastisch zusammengedrückt. Die Abstandhalter können insbesondere als Bolzen oder als Hülsen ausgebildet sein.

Wenn die Kraftübertragung von Ständerblech zu Ständerblech erfolgt, ist die Halteeinrichtung als verfestigte Tränkmasse ausgebildet, mittels derer die Ständerbleche des Ständerblechpakets relativ zueinander fixiert sind. Die Tränkmasse kann insbesondere ein Harz sein.

Vorzugsweise ist der Elektromotor als gehäuseloser Elektromotor ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen
- FIG 1: schematisch einen Elektromotor,
- FIG 2 bis 4: schematisch Ständerbleche,
- FIG 5: schematisch ein Ständerblechpaket und
- FIG 6 und 7: schematisch ein Ständerblechpaket mit Abschlusselementen und Halteeinrichtung.

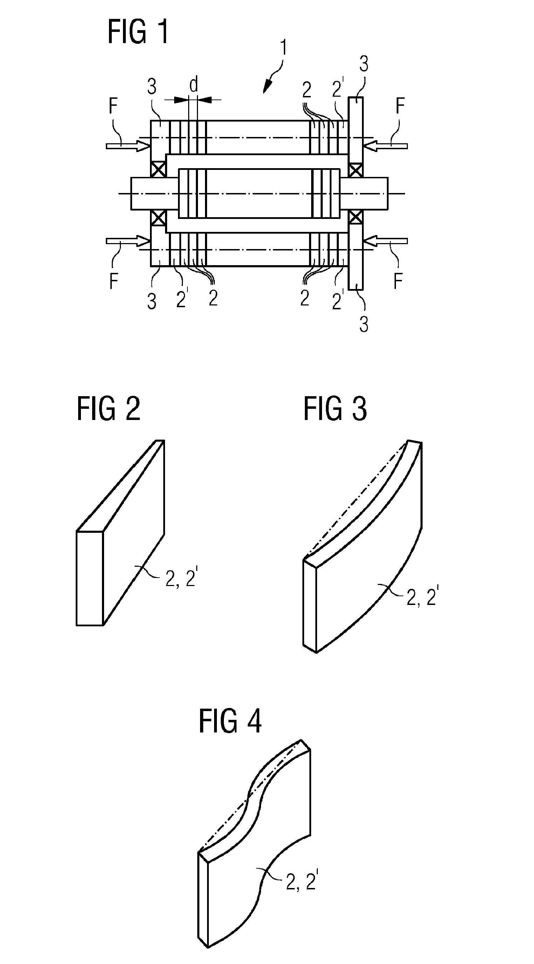

Gemäß FIG 1 weist ein Elektromotor ein Ständerblechpaket 1 auf. Das Ständerblechpaket 1 besteht aus einem Stapel von Ständerblechen 2, 2', wobei mit dem Bezugszeichen 2 die inneren Ständerbleche 2 bezeichnet sind, die beidseitig von je einem anderen Ständerblech 2, 2' begrenzt sind und mit dem Bezugszeichen 2' die beiden äußeren Ständerbleche 2' bezeichnet sind, die nur einseitig von einem inneren Ständerblech 2 begrenzt sind.

An die beiden äußeren Ständerbleche 2' ist jeweils ein Abschlusselement 3 angesetzt. Eines der Abschlusselemente 3 kann beispielsweise als bedienseitiger Lagerschild ausgebildet sein. Das andere Abschlusselement 3 kann beispielsweise als antriebsseitiger Gehäuseflansch ausgebildet sein, mittels dessen der Elektromotor an eine anzutreibende Einrichtung angeflanscht werden kann. Die Abschlusselemente 3 sind über in FIG 1 schematisch angedeutete Verbindungsbolzen 4 miteinander verspannt. Die Abschlusselemente 3 sind daher an die beiden äußeren Ständerbleche 2' des Ständerblechpakets 1 angedrückt. Dies ist in FIG 1 durch entsprechende Kraftpfeile F angedeutet. Die Verbindungsbolzen 4 durchqueren das Ständerblechpaket 1.

Die Ständerbleche 2, 2' weisen idealerweise über ihre gesamte Fläche eine einheitliche Dicke d auf und sind idealerweise plan. Wäre dies in der Praxis der Fall, stellte sich die der vorliegenden Erfindung zugrunde liegende Problematik nicht. In der Realität können die einzelnen Ständerbleche 2, 2' jedoch beispielsweise entsprechend der stark übertriebenen Stellung von FIG 2 einen Dickenkeil aufweisen und/oder entsprechend der stark übertriebenen Stellung von FIG 3 gewölbt sein und/oder entsprechend der stark übertriebenen Stellung von FIG 4 gewellt sein. Vor allem Ständerbleche 2, 2' mit einem - wenn auch nur geringen - Dickenkeil sind problematisch.

Die über die Verbindungsbolzen 4 miteinander verspannten Abschlusselemente 3 üben auf das Ständerblechpaket 1 einen Druck aus. Dennoch sollen die beiden äußeren Ständerbleche 2' parallel zueinander ausgerichtet gehalten werden. Um diese parallele Ausrichtung zu gewährleisten, ist dem Ständerblechpaket 1 eine Halteeinrichtung 5, 6 zugeordnet.

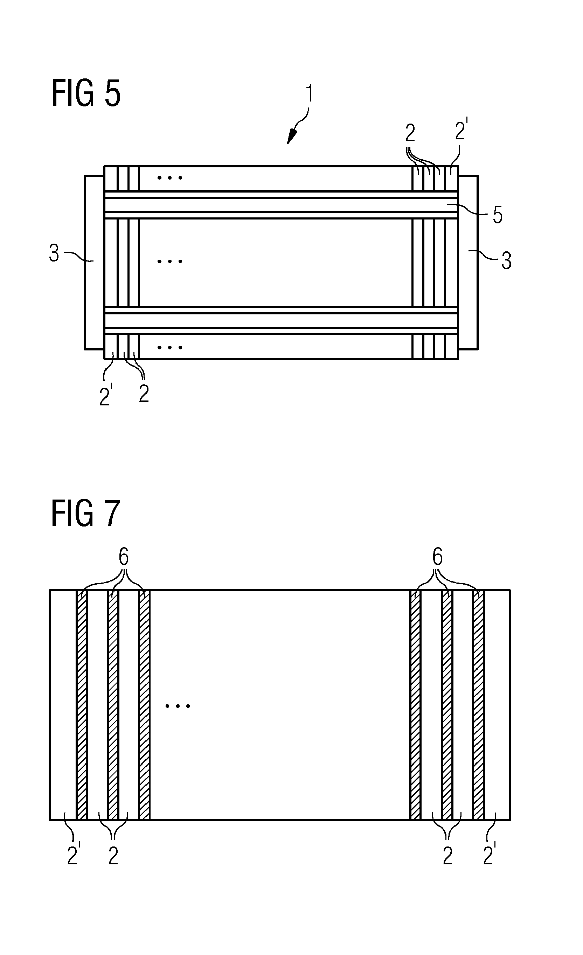

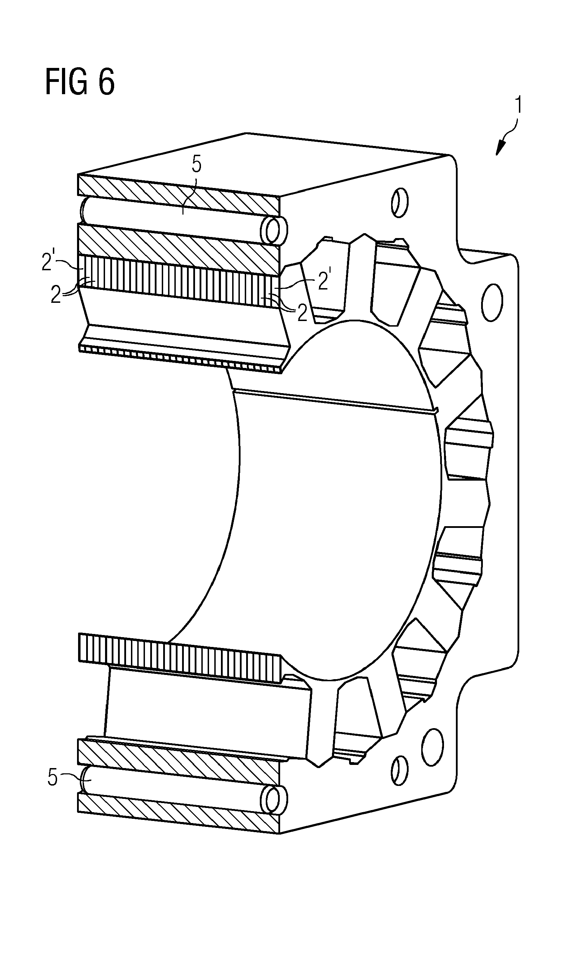

Beispielsweise ist es gemäß den FIG 5 und 6 möglich, dass die Halteeinrichtung eine Mehrzahl von Abstandhaltern 5 aufweist, beispielsweise 4, 6 oder 8 derartige Abstandhalter 5. Die Abstandhalter 5 können beispielsweise entsprechend der Darstellung von FIG 5 als Hülsen oder entsprechend der Darstellung von FIG 6 als Bolzen ausgebildet sein.

Die Abstandhalter 5 sind gleich lang. Sie weisen eine definierte Länge auf und erstrecken sich durch das Ständerblechpaket 1 hindurch vom einen zum anderen Abschlusselement 3. Ihre Länge ist derart bemessen, dass sie zwischen der Länge des Ständerblechpakets 1 in dessen vollständig zusammengedrückten Zustand und der Länge des Ständerblechpakets 1 in dessen entspannten Zustand liegt. Beim Verspannen (Vorgang) der Abschlusselemente 3 und des Ständerblechpakets 1 wird das Ständerblechpaket 1 daher elastisch zusammengedrückt, bis die Abstandhalter 5 beide Abschlusselemente 3 berühren und so einem weiteren Zusammendrücken des Ständerblechpakets 1 entgegenstehen. Aufgrund der einheitlichen Länge der Abstandhalter 5 sind somit die beiden äußeren Ständerbleche 2' in einem vordefinierten Abstand voneinander und parallel zueinander ausgerichtet. Das Ständerblechpaket 1 ist im verspannten Zustand von den Abschlusselementen 3 elastisch zusammengedrückt. Der vordefinierte Abstand entspricht der Länge der Abstandhalter 5.

Alternativ ist es gemäß FIG 7 möglich, dass die Halteeinrichtung als verfestigte Tränkmasse 6 - insbesondere als Tränkharz - ausgebildet ist, mittels derer die Ständerbleche 2, 2' des Ständerblechpakets 1 relativ zueinander fixiert sind.

Im Falle der Ausgestaltung gemäß FIG 7 wird im Rahmen der Fertigung zunächst eine zu den FIG 5 und 6 analoge Vorgehensweise ergriffen, wobei jedoch die im Rahmen der Fertigung verwendeten Abschlusselemente 3 nur vorläufige Abschlusselemente 3 sind, eventuell sogar nur einmalig verwendete Abschlusselemente 3. Das Ständerblechpaket 1 wird sodann mit der Tränkmasse 6 getränkt, und es wird die Verfestigung der Tränkmasse 6 - beispielsweise ein Aushärten - abgewartet. Sodann werden die vorläufigen Abschlusselemente 3 entfernt. Die Abstandhalter 5 können alternativ im Ständerblechpaket 1 verbleiben oder aus dem Ständerblechpaket 1 entfernt werden. Das so gefertigte Ständerblechpaket 1 weist aufgrund der verfestigten Tränkmasse 6 eine hinreichende Stabilität auf, um dem beim Verspannen der endgültigen Abschlusselemente 3 auftretenden Druck zu widerstehen.

Der Elektromotor ist vorzugsweise entsprechend der Darstellung in den FIG 1, 5, 6 und 7 als gehäuseloser Elektromotor ausgebildet. Er kann entsprechend der Darstellung von FIG 6 - dies gilt für alle Ausgestaltungen des erfindungsgemäßen Elektromotors - als Elektromotor mit getrenntem Joch- und Sternpaket ausgebildet sein.

Es kann erforderlich sein, die Abschlusselemente 3 relativ zu einer Ständerpaketbohrung zu zentrieren und auszurichten. Dies kann in an sich bekannter Weise über Zentriernocken, Ausrichtelemente und dergleichen mehr erfolgen.

Die vorliegende Erfindung weist viele Vorteile auf. Insbesondere ist sie leicht und kostengünstig ausführbar und liefert zuverlässige Ergebnisse. Es entfällt die Komplettbearbeitung des aus Ständerblechpaket 1 und Abschlusselementen 3 bestehenden Blocks. Prozessablaufstörungen durch das Freidrehen von Lunkern können nicht mehr entstehen. Die Durchlaufzeit im Herstellungsprozess reduziert sich.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Elektromotor,
- wobei der Elektromotor ein Ständerblechpaket (1) aufweist, das aus einem Stapel von Ständerblechen (2,2') besteht,
- wobei an die beiden äußeren Ständerbleche (2') jeweils ein Abschlusselement (3) angesetzt ist,
- wobei die Abschlusselemente (3) über das Ständerblechpaket (1) durchquerende Verbindungsbolzen (4) miteinander verspannt sind, so dass die Abschlusselemente (3) an die beiden äußeren Ständerbleche (2') angedrückt sind,
- wobei dem Ständerblechpaket (1) eine Halteeinrichtung (5, 6) zugeordnet ist, aufgrund derer die beiden äußeren Ständerbleche (2') trotz des von den Abschlusselementen (3) auf das Ständerblechpaket (1) ausgeübten Drucks in einem vordefinierten Abstand voneinander und parallel zueinander ausgerichtet gehalten werden.

2. Elektromotor nach Anspruch 1, **dadurch gekennzeichnet, dass** die Halteeinrichtung (5,6) eine Mehrzahl von Abstandhaltern (5) aufweist, die eine definierte Länge aufweisen und sich durch das Ständerblechpaket (1) hindurch vom einen zum anderen Abschlusselement (3) erstrecken, und dass das Ständerblechpaket (1) von den Abschlusselementen (3) elastisch zusammengedrückt ist.

3. Elektromotor nach Anspruch 2, **dadurch gekennzeichnet, dass** die Abstandhalter (5) als Bolzen oder als Hülsen ausgebildet sind.

4. Elektromotor nach Anspruch 1, **dadurch gekennzeichnet, dass** die Halteeinrichtung (5,6) als verfestigte Tränkmasse (6) ausgebildet ist, mittels derer die Ständerbleche (2,2') des Ständerblechpakets (1) relativ zueinander fixiert sind.

5. Elektromotor nach Anspruch 4, **dadurch gekennzeichnet, dass** die verfestigte Tränkmasse (6) ein Harz ist.

6. Elektromotor nach einem der obigen Ansprüche, **dadurch gekennzeichnet , dass** der Elektromotor als gehäuseloser Elektromotor ausgebildet ist.
